## Europäisches Patentamt
## European Patent Office
## Office européen des brevets

(11) Numéro de publication: **0 038 093**
**B1**

(12) **FASCICULE DE BREVET EUROPEEN**

(45) Date de publication du fascicule du brevet: **06.02.85**

(21) Numéro de dépôt: **81200317.6**

(22) Date de dépôt: **23.03.81**

(51) Int. Cl.⁴: **G 02 C 11/02, G 02 C 1/06**

(54) Cercle à drageoir pour monture de lunettes.

(30) Priorité: **28.03.80 FR 8007509**

(43) Date de publication de la demande:
**21.10.81 Bulletin 81/42**

(45) Mention de la délivrance du brevet:
**06.02.85 Bulletin 85/06**

(84) Etats contractants désignés:
**AT DE GB IT**

(56) Documents cités:
**FR-A-2 064 578**
**US-A-2 991 694**

(73) Titulaire: **Etablissements Auguste LAMY & FILS
216, rue de la République
F-39400 Morez (FR)**

(72) Inventeur: **Lamy, Robert Gabriel Albert
10 Bis, rue de la Die
F-39400 Morez (FR)**

(74) Mandataire: **Silhol, Christian Maurice Alfred
et al
c/o BUGNION S.A. Conseils en Propriété
Industrielle 10, route de Florissant Case Postale
375
CH-1211 Genève 12 - Champel (CH)**

Courier Press, Leamington Spa, England.

EP 0038093 B1

## Description

L'invention concerne la lunetterie, particulièrement un cercle à drageoir pour monture de lunettes comportant des moyens de fixation d'une galerie décorative indépendante.

Il existe de nombreux modèles de lunettes, spécialement à monture métallique, dont l'aspect peut être modifié, selon les fantaisies de la mode, par une galerie décorative posée sur le cercle à drageoir.

Le brevet FR—A—2.064.578 (Henry Jullien & Cie) décrit un enjoliveur en matière plastique destiné à s'adapter sur la partie supérieure de chaque cercle d'une monture de lunettes, caractérisé en ce qu'il se compose d'un bloc ayant la forme et l'aspect extérieur désirés et qu'il présente un évidement longitudinal formé de tois parties, à savoir deux portions latérales de faible profondeur destinées à recevoir le cercle proprement dit, et une partie centrale de plus grande profondeur, légèrement évasée vers l'extérieur et destinée à recevoir à force une barrette métallique soudée à la partie supérieure médiane du cercle, l'assemblage se faisant grâce à la déformabilité légère de la matière plastique.

Le brevet US—A—2.991.694 (W. Z. Whipple) expose (collonne 2, lignes 53 à 68, fig. 4 et 6) que la portion frontale du cercle à drageoir 11 est pourvue d'une paire de saillies latérales 32 façonnées par écrasement du métal. Pour ce faire, un appareillage approprié contraint par pression le cercle à drageoir, de façon que soient formées par extrusion, sur la face du cercle opposée à celle qui reçoit le verre, des saillies latérales 32 qui sont insérées dans des logements 33 d'une rainure intérieure 24 de l'enjoliveur 21.

Les différents moyens de fixation de galeries décoratives précités sont mis en place par soudure, sertissage, estampage, etc., sur des cercles à drageoir préfabriqués par des opérations coûteuses en temps de main d'oeuvre.

La présente invention a pour objectif la fabrication de cercles à drageoir prêts à recevoir des galeries décoratives différentes et de permettre la fixation de celles-ci de façon simple autant qu'efficace par une pression exercée sur une galerie posée sur le cercle.

A cette fin, le cercle à drageoir selon l'invention est pourvu de moyens constitués par une déformation en creux ou en relief du cercle à drageoir et est caractérisé par le fait que cette déformation s'étent longitudinalement et continûment sur toute la périphérie du cercle et par le fait que cette déformation est obtenue par laminage d'un fil métallique constituant le cercle.

Les principaux avantages apportés par un tel cercle à drageoir résident dans le fait que son emploi sur des montures de lunettes permet une grande variété de combinaisons décoratives par la mise en place facile et rapide de galeries différentes sur une monture standard dont l'aspect extérieur, même sans galerie, reste parfaitement esthétique.

D'autres avantages ressortiront de la description qui va suivre des modes de réalisation de l'invention décrits à titre d'exemples non limitatifs et du dessin dans lequel:

La figure 1 est une vue en coupe d'un cercle à drageoir muni d'un verre et surmonté d'une galerie décorative.

La figure 2 est une vue en perspective et en coupe partielle d'un cercle à drageoir pourvu d'épaulements de fixation d'une galerie.

Les figures 3 et 4 sont des vues en coupe de différents moyens de fixation creusés dans le cercle à drageoir.

La figure 5 est une variante de la figure 1.

Les figures 6 à 8 sont des vues en perspective et en coupe des différents moyens de fixation en relief sur la périphérie extérieure du cercle à drageoir.

Les figures 9 et 10 sont des vues en plan des différents moyens de fixation en creux et en relief.

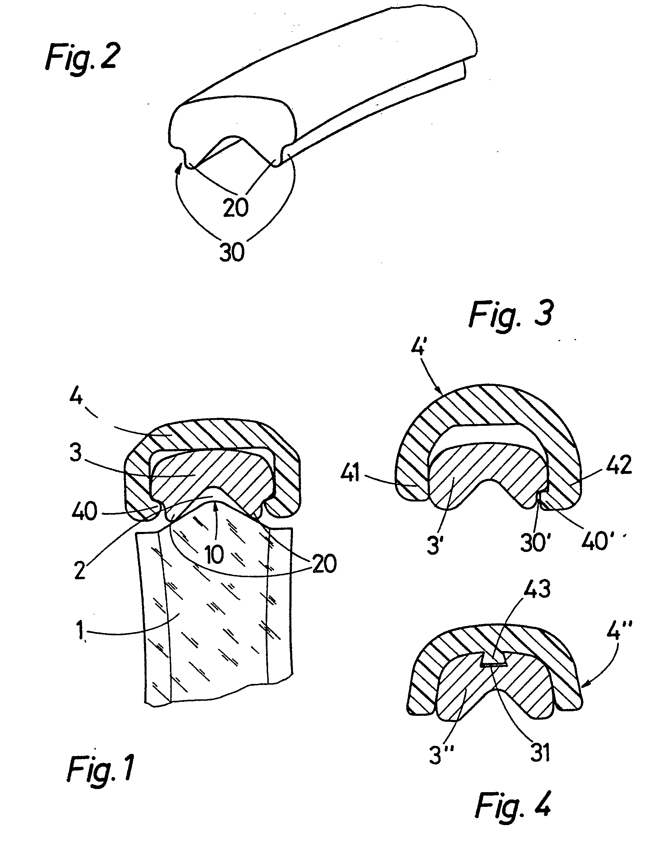

En se référant à la figure 1 du dessin, la monture de lunettes comporte, en particulier, un verre 1 enchâssé par son biseau 10 dans le drageoir 2 du cercle 3 surmonté d'une galerie 4.

L'épaisseur des verres de lunettes varie en fonction du défaut de la vue de leur porteur et, en général, dépasse largement les bords 20 du drageoir 2 dont l'écartement tend, pour des raisons d'esthétique, à rester limité. Il importe, en conséquence, que les bords inférieurs 40 de la galerie ne viennent pas, pour assurer la fixation de celle-ci se recourber contre les bords 20 du drageoir et gêner ainsi le maintien d'un verre épais dans le cercle 3.

La figure 2 représente un cercle 3 sur lequel sont aménagés deux épaulements 30, de part et d'autre du drageoir 2, dont chaque bord forme un des côtés de chaque épaulement 30.

Les bords recourbés 40 d'une galerie 4 viennet s'encastrer dans les épaulements 30 qui constituent les moyens d'une insertion rapide autant qu'efficace de ladite galerie sur le cercle 3.

La figure 3 représente un cercle 3' comportant un seul épaulement 30' et une galerie 4' ayant un seul bord recourbé 40', le maintien de cette galerie sur le cercle résultant de l'élasticité existant entre les bords 41 et 42 de ladite galerie, laquelle exerce une pression sur les bords du cercle 3'.

La figure 4 représente un cercle 3'' dont la partie opposée au drageoir est creusée par une rainure 31 dans laquelle pénètre une nervure 43 de forme complémentaire aménagée dans la partie concave de la galerie 4''.

Les formes de réalisation représentées par les figures 1 à 4 comportent des moyens de fixation creusés dans le cercle à drageoir de façon à recevoir des formes complémentaires en relief sur les galeries correspondantes.

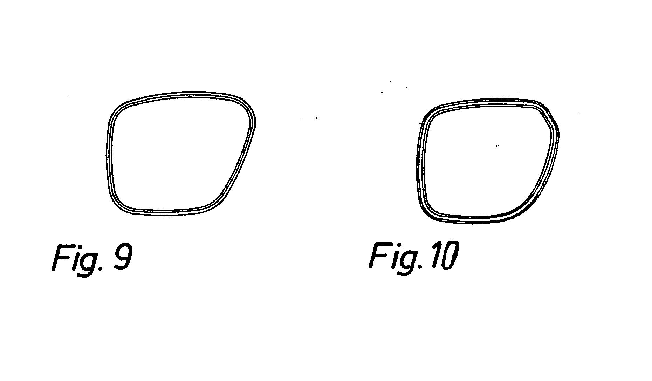

Lesdits moyens sont creusés de manière continue sur toute la périphérie du cercle à drageoir comme représentées sur les figures 9 et 10.

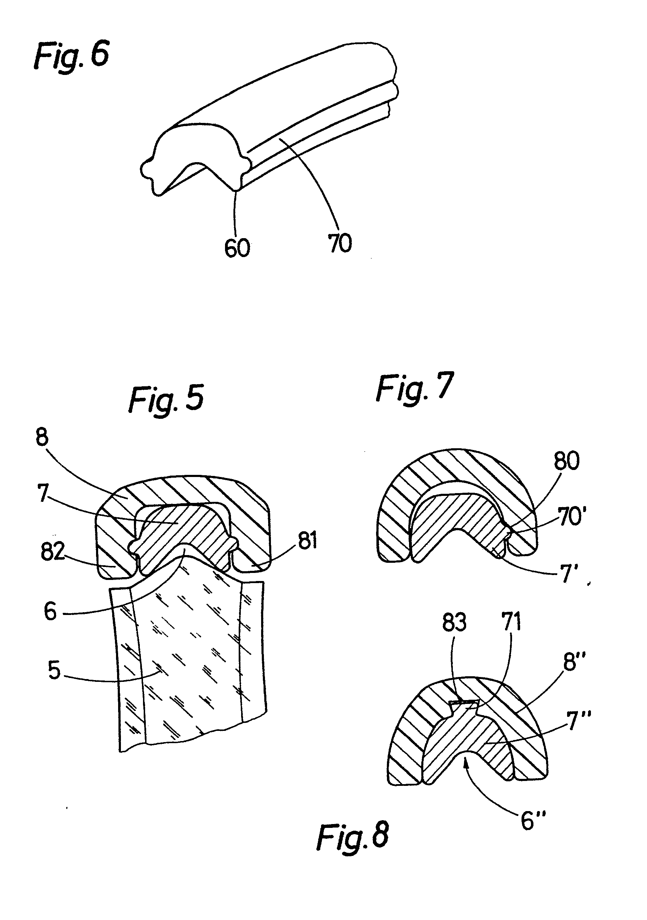

La figure 5 représente une vue en coupe d'un verre 5 enchâssé dans un drageoir 6 d'un cercle 7 revêtu d'une galerie 8.

Sur la figure 6 on voit que les moyens de fixation de la galerie 8 sont constitués par au moins une nervure 70 située à l'extérieur du bord 60 du drageoir 6 auquel elle est parallèle.

La figure 7 représente un cercle 7' n'ayant qu'une seule nervure 70'.

Les galeries correspondantes comportent une ou deux rainures 80 de forme complémentaire de la nervure 70, situées sur les bords 81, 82 retombants de la galerie 8.

La figure 8 représente un cercle 7'' sur lequel les moyens de fixation d'une galerie 8'' sont constituées par une nervure 71 située sur la périphérie dudit cercle à l'opposé du drageoir 6''. Une rainure 83 correspondante en forme et en position est creusée dans la galerie 8''.

Les formes de réalisation représentées par les figures 5 à 8 comportent des moyens de fixation en relief sur les cercles à drageoir et en creux dans les galeries correspondantes.

Ces reliefs sont continus sur toute la périphérie du cercle, comme représentés sur les figures 9 et 10.

Ces moyens de fixation sont fabriqués avec le cercle à drageoir par laminage d'un fil métallique, leur présence sur le cercle terminé est tellement discrète que l'absence de galerie décorative ne se ramarque pas.

Le cercle à drageoir selon l'invention apporte de nombreux avantages parmi lesquels on peut citer:

— une simplication du montage des lunettes par suppression des opérations de mise en place de galeries par vis, goupilles, collage, etc.;
— une possibilité de faire varier l'aspect esthétique des lunettes avec un seul et même type de monture;
— une gestion plus facile des stocks réguits à un seul type de monture métallique avec ou sans galerie;
— l'épaisseur des verres enchâssés dans le cercle ne dépend plus que des dimensions du drageoir dont l'écartement des bords n'est plus réduit par l'insertion des bords d'une galerie.

**Revendications**

1. Cercle à drageoir pour monture de lunettes comportant des moyens de fixation d'une galerie décorative indépendant destinés à s'accrocher avec une partie complémentaire de la galerie, ces moyens étant obtenus par une déformation en creux ou en relief du cercle à drageoir, caractérisé en ce que cette déformation s'étend longitudinalement et continûment sur toute la périphérie du cercle et par le fait que cette déformation est obtenue par laminage d'un fil métallique constituant le cercle.

2. Cercle à drageoir selon la revendication 1, caractérisé par le fait que ladite déformation produit au moins un épaulement (30) contre lequel vient s'appuyer au moins un bord recourbé (40) de la galerie (4).

3. Cercle à drageoir selon la revendication 1, caractérisé par le fait que ladite déformation est une rainure (31) dans laquelle pénètre une nervure (43) de forme complémentaire aménagée dans la partie concave de la galerie (4'').

4. Cercle à drageoir selon la revendication 1, caractérisé par le fait que ladite déformation produit au moins une nervure (70, 70', 71) coopérant avec au moins une rainure (80, 83) de forme complémentaire creusée dans la galerie (8, 8'').

**Patentansprüche**

1. Brillenfassung mit Nut für ein Brillengestell, mit zur Befestigung eines unabhängigen dekorativen Aufsatzes dienden Mitteln, die dazu bestimmt sind, sich an einem komplementären Teil des Aufsatzes festzuhaken, und welche durch Hohl- oder Reliefverformung der Fassung erhalten wurden, dadurch gekennzeichnet, dass sich diese Verformung kontinuierlich über den ganzen Umfang der Fassung erstreckt und dass diese Verformung durch Walzen eines die Fassung bildenden metallischen Drahts hergestellt ist.

2. Brillenfassung nach Anspruch 1, dadurch gekennzeichnet, dass die erwähnte Verformung wenigstens eine Schulter (30) bildet, gegen welche wenigstens ein gekrümmter Rand (40) des Aufsatzes (4) anliegt.

3. Brillenfassung nach Anspruch 1, dadurch gekennzeichnet, dass die erwähnte Verformung eine Nut (31) ist, in welche ein komplementär geformte Rippe (43) eingreift, die am konkaven Teil des Aufsatzes (4'') angeordnet ist.

4. Brillenfassung nach Anspruch 1, dadurch gekennzeichnet, dass die erwähnte Verformung wenigstens eine Rippe (70, 70', 71) bildet, die mit wenigstens einer komplementär geformten, in den Aufsatz (8, 3') eingelassenen Nut (80, 83) zusammenwirkt.

**Claims**

1. Bezel ring for spectacle frames, comprising means of fastening an independent decorative mounting, which means are intended to be attached to a complementary part of the mounting and being obtained by intaglio or relief deformation of the bezel ring, characterised in that this deformation extends longitudinally and continuously over the entire periphery of the ring and by the fact that this deformation is obtained by rolling a wire constituting the ring.

2. Bezel ring according to Claim 1, characterised by the fact that the said deformation produces at least one shoulder (30) against which at least one curved edge (40) of the mounting (4) comes to bear.

3. Bezel ring according to Claim 1, characterised by the fact that the said deformation is a groove (31) into which penetrates a rib (43) of complementary shape formed in the concave portion of the mounting (4'').

4. Bezel ring according to Claim 1, characterised by the fact that the said deformation produces at least one rib (70, 70', 71) cooperating with at least one groove (80, 83) of complementary shape formed in the mounting (8, 8').

0 038 093

Fig. 2

Fig. 3

Fig. 1

Fig. 4

1

*Fig. 6*

60   70

*Fig. 5*

8

7

82

6

5

81

*Fig. 7*

80

70'

7'

83   71

8''

7''

6''

*Fig. 8*

Fig. 9

Fig. 10